# EUROPÄISCHE PATENTANMELDUNG

(11) **EP 4 826 266 A1**
(43) Veröffentlichungstag der Anmeldung: **21.10.2026**
(21) Anmeldenummer: 25170410.2
(22) Anmeldetag: 14.04.2025
(51) Int. Cl.: F16B 25/00, F16B 25/10

(54) **LOCH- UND GEWINDEFORMENDE SCHRAUBE**

(71) Anmelder: Nedschroef Altena GmbH, 58762 Altena (DE)
(72) Erfinder: Fuhrmann, Frederik, 59423 Unna (DE); Thomashoff, Dirk, 44269 Dortmund (DE)
(74) Vertreter: Patentanwälte Dörner & Kötter PartG mbB

(57) **Zusammenfassung**

Die Erfindung betriff eine Loch- und gewindeformende Schraube (1), mit einem Schraubenkopf (2), der eine Schraubenantriebsausbildung aufweist, und einen hieran anschließenden, an seinem freien Ende eine Schraubenspitze (6) aufweisenden Schraubenschaft (3), der einen mit einem Gewinde versehenen Gewindeabschnitt (4) und einen sich bis zur Schraubenspitze (6) erstreckenden, zumindest bereichsweise gewindefreien Formabschnitt (5) aufweist, dessen Querschnitt in Richtung auf die Schraubenspitze (6) abnimmt, wobei der Formabschnitt (5) einen ersten Teilformabschnitt (51) und einen zweiten Teilformabschnitt (53) aufweist, deren Querschnitte jeweils in Richtung auf die Schraubenspitze (6) kontinuierlich abnehmen und zwischen denen ein Zwischenabschnitt (52) angeordnet ist, der zumindest bereichsweise einen in Richtung auf die Schraubenspitze (6) zunehmenden Querschnitt aufweist.

## Beschreibung

Die Erfindung betrifft eine loch- und gewindeformende Schraube, mit einem Schraubenkopf, der eine Schraubenantriebsausbildung aufweist und einen hieran anschließenden, an seinem freien Ende eine Schraubenspitze aufweisenden Schraubenschaft, der einen zumindest bereichsweise mit einem Gewinde versehenen Gewindeabschnitt und einen sich bis zur Schraubenspitze erstreckenden, zumindest bereichsweise gewindefreien Formabschnitt aufweist, dessen Querschnitt in Richtung auf die Schraubenspitze abnimmt.

Zur lösbaren Verbindung von Blechbauteilen werden häufig loch- und gewindeformende Schrauben eingesetzt. In der DE 3909725 C1 ist eine loch- und gewindeformende Schraube mit einem Schraubenschaft offenbart, der einen Gewindeabschnitt aufweist, an den sich ein gewindefreier Abschnitt anschließt, der sich bis zur Schraubenspitze erstreckt. Der gewindefreie Abschnitt ist aus einem ersten, zylindrischen Teilabschnitt gebildet, an den sich ein zweiter Teilabschnitt anschließt, dessen Querschnitt in Richtung auf die Schraubenspitze kontinuierlich abnimmt.

In der WO 2010/003901 A1 wird vorgeschlagen, den gewindefreien Abschnitt derart auszubilden, dass dessen Querschnitt in Richtung auf die Schraubenspitze direkt ab dem Ende des Gewindeabschnitts kontinuierlich abnimmt. Dieser in seinem Durchmesser abnehmende gewindefreie Abschnitt wird als Formabschnitt bezeichnet und soll dazu dienen, nach dem Herstellen eines Lochs in einem Blech einen Durchzug zu formen, der dazu dient, ein besseres Halten des Gewindes in dem Material zu ermöglichen.

Vor diesem Hintergrund liegt der Erfindung die Aufgabe zu Grunde, eine im Hinblick auf das Montageverhalten verbesserte loch- und gewindeformende Schraube bereitzustellen.

Gemäß der Erfindung wird diese Aufgabe durch eine loch- und gewindeformende Schraube mit den Merkmalen des Patentanspruchs 1 gelöst. Dadurch, dass der Formabschnitt einen ersten Teilformabschnitt und einen zweiten Teilformabschnitt aufweist, deren Querschnitte in Richtung auf die Schraubenspitze kontinuierlich abnehmen und zwischen denen ein Zwischenabschnitt angeordnet ist, der zumindest bereichsweise einen in Richtung auf die Schraubenspitze zunehmenden Querschnitt aufweist, ist eine Verbesserung des Einschraubverhaltens erzielt.

Überraschend hat sich gezeigt, dass beim Einschrauben einer erfindungsgemäßen Schraube in ein Blech durch den Zwischenabschnitt eine Beeinflussung des Fließverhaltens des Blechmaterial bewirkt ist, woraus eine Erhöhung der Performance des Montageprozesses resultiert. Der Begriff "Blechmaterial" ist hier weit gefasst zu verstehen, wobei hierunter beispielsweise auch Profilmaterial oder Profilstrukturen zu subsummieren sind.

Unter einem "abnehmenden Querschnitt" ist vorliegend eine Reduzierung des Querschnitts zu verstehen, woraus eine reduzierte Querschnittsfläche resultiert. Unter einem "zunehmenden Querschnitt" ist entsprechend eine Vergrößerung des Querschnitts zu verstehen, woraus eine vergrößerte Querschnittsfläche resultiert.

In Weiterbildung der Erfindung weist der Zwischenabschnitt einen in Richtung auf die Schraubenspitze abnehmenden ersten Teilabschnittquerschnitt auf, der in einen zweiten Teilabschnitt mit in Richtung auf die Schraubenspitze zunehmenden Querschnitt übergeht. Hierdurch ist bei Einschrauben der Schraube in ein Blechmaterial eine kurzfristige Entspannung des Blechmaterials erzielt.

In Ausgestaltung der Erfindung ist der Zwischenabschnitt durch eine in den Formabschnitt eingebrachte umlaufende Nut gebildet. Hierdurch ist eine einfache Herstellung des Zwischenabschnitts ermöglicht.

In weiterer Ausgestaltung der Erfindung weist die Nut in axialer Richtung eine bogenförmige Seitenkontur auf. Hierdurch ist bei Einschrauben der Schraube in ein Blechmaterial ein verbesserter Materialfluss erzielt. Zudem ist einem möglichen Verkeilen der Schaube beim Einschraubvorgang entgegengewirkt. Zudem wird hierdurch eine Reduzierung und Unterbrechung auftretender Kaltverschweißungsprozesse zwischen Schraube und Blechmaterial bewirkt. Unter Beibehaltung der vorteilhaften Auswirkungen einer schlanken Spitzengeometrie auf das Materialverdrängungsverhalten ist zugleich ein beschleunigter Lochformprozess erzielt. Dies ist unter anderem in der reduzierten Keilwirkung, bedingt durch eine teilweise Unterbrechung des in Richtung des Schraubenkopfes kontinuierlich ansteigenden Querschnitts der Formabschnitts, begründet. Zudem wird während des Lochformprozesses ein Impuls in Richtung der Schraubenspitze in das Blechmaterial eingebracht, mit dem eine vorteilhafte Wirkung ebendieses Prozesses, insbesondere auf die Dauer bis zur Materialdurchdringung erzielt ist. Darüber hinaus kann so auch die Ausprägung eines der Schraubenspitze entgegen gerichteten Materialaufwurfs vermindert werden. Des Weiteren ist eine Erweiterung der Verfahrensgrenzen hinsichtlich der zu durchdringenden Materialdicke zu erwarten, insbesondere bei einer Materialstärke des Blechmaterials, die maximal dem Abstand zwischen Schraubenspitze und Übergang des Zwischenabschnitts zum zweiten Teilformabschnitt entspricht.

In Weiterbildung der Erfindung ist der minimale Querschnitt des zweiten Teilformabschnitts größer, als der maximale Querschnitt des ersten Teilformabschnitts. Hierdurch ist ein guter Lochformprozess erzielt. Bevorzugt beträgt der kleinste Durchmesser des Zwischenabschnitts zwischen 29/50 und 17/20 des größten Durchmessers des ersten Teilformabschnitts.

In Ausgestaltung der Erfindung sind die äußeren Kanten der Gewindeflanken des Gewindes des Gewindeabschnitts zumindest bereichsweise in ein Prisma mit abgerundeten Ecken, insbesondere mit einem Querschnitt in Form eines Dreiecks mit abgerundeten Ecken und konvex gekrümmten Seiten einbeschrieben und der Querschnitt des Gewindekerns des Gewindeabschnitts des Schraubenschafts weist zumindest bereichsweise die Form eines Polygons, insbesondere eines Dreiecks mit abgerundeten Ecken und konvex gekrümmten Seiten auf. Hierdurch ist die Ausformung eines Gewindes in dem durch den Lochprozess hergestellten Durchzug begünstigt, wodurch ein zu großer Anstieg des Einschraubwiderstands beim Gewindeformen vermieden ist. Insbesondere wird hierdurch der Erzeugung von Materialabträgen beim Gewindeformprozess entgegengewirkt.

In weiterer Ausgestaltung der Erfindung weist der Formabschnitt zumindest bereichsweise einen Querschnitt in Form eines Polygons, insbesondere eines Dreiecks mit abgerundeten Ecken und konvex gekrümmten Seiten auf. Hierdurch ist beim Einbringen der Schraube in ein Blech eine Optimierung des durch den Formabschnitt ausgebildeten Durchzugs im Hinblick auf den nachfolgenden Gewindeformprozess erzielt.

In Weiterbildung der Erfindung liegen die Mantelflächen des ersten Teilformabschnitts und des zweiten Teilformabschnitts zumindest bereichsweise auf einem gemeinsamen Rotationskörper, dessen Querschnitt in Richtung der Schraubenspitze kontinuierlich abnimmt. Hierdurch ist beim Einbringen der Schraube in ein Blech eine gleichmäßige Aufweitung des Durchzugs erzielt, wodurch das Fließverhalten des Blechmaterials begünstigt ist.

Unter einem Rotationskörper wird vorliegend eine um die Mittelachse des Schraubenschaftes rotierende Kurve verstanden. Diese Kurve liegt zumindest bereichsweise auf jeweils einer Seitenkante des Längsschnitts des ersten und des zweiten Teilformabschnitts.

Vorteilhaft weisen die Seitenlinien des ersten und des zweiten Teilformabschnitts jeweils eine konstante Krümmung auf. Unter der Seitenlinie eines Teilformabschnitts ist vorliegend eine Seitenkante des Längsschnitts des Teilformabschnitts zu verstehen. Unter einer "konstanten Krümmung" ist vorliegend eine im Rahmen der Fertigungstoleranzen bei der Schraubenherstellung erzielbare konstante Krümmung zu verstehen.

In Ausgestaltung der Erfindung weist der Formabschnitt im Anschluss an den Gewindeabschnitt einen dritten Teilformabschnitt mit konstantem Querschnitt auf. Hierdurch ist beim Einbringen der Schraube in ein Blech eine zentrierte Einführung des Gewindeabschnitts in den durch den Formabschnitt in das Blech eingebrachten Durchzug unterstützt.

Der Begriff "konstanter Querschnitt" ist ebenfalls unter Berücksichtigung der Fertigungstoleranzen bei der Herstellung einer Schraube zu verstehen.

Andere Weiterbildungen und Ausgestaltungen der Erfindung sind in den übrigen Unteransprüchen angegeben. Ausführungsbeispiele sind in den nachfolgenden schematischen Zeichnungen dargestellt und werden nachfolgend im Einzelnen beschrieben. Es zeigen:

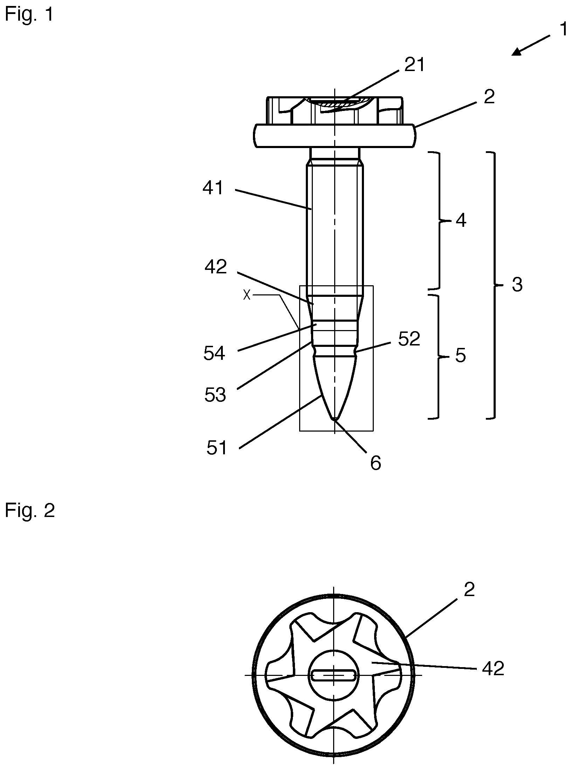

- Figur 1: die Darstellung einer loch- und gewindeformenden Schraube;
- Figur 2: die Schraube aus Figur 1 in der Draufsicht;
- Figur 3: die Detaildarstellung des Ausschnitts X des Schaftes der Schraube aus Figur 1;
- Figur 4: die Darstellung des Formabschnitts des Ausschnitts aus Figur 3

a) im Querschnitt A - A;
b) im Querschnitt B - B;
c) im Querschnitt C - C;
d) im Querschnitt D - D.

Die als Ausführungsbeispiel gewählte loch- und gewindeformende Schraube 1 weist einen Schraubenkopf 2 auf, an den sich ein Schraubenschaft 3 anschließt, der an seinem freien Ende in einer Schraubenspitze 6 mündet. Im Ausführungsbeispiel ist die Schraubenspitze abgerundet ausgebildet. Diese kann zum leichteren Eindringen in ein Blech auch spitz ausgeführt sein. Der Schraubenkopf 2 ist mit einer Einformung 21 versehen, die der formschlüssigen Aufnahme eines Schraubwerkzeugs dient. Alternativ kann der Schraubenkopf zur Schraubenantriebsausbildung beispielsweise auch unrund ausgebildet sein oder eine unrunde Anformung aufweisen. Wesentlich ist das Vorhandensein einer Ausformung zur form- oder kraftschlüssigen Drehmomentübertragung.

Der Schraubenschaft 3 umfasst einen bereichsweise zylindrischen, mit einem Gewinde 41 versehenen Gewindeabschnitt 4 und einen sich bis zur Schraubenspitze 6 erstreckenden, gewindefreien Formabschnitt 5. Das Gewinde 41 läuft in einem weiteren Abschnitt des Gewindeabschnitts 4, der Furchzone 42 aus.

Die äußeren Kanten der Gewindeflanken des Gewindes 41 des Gewindeabschnitts 4 sind im Ausführungsbeispiel zu einem überwiegenden Anteil in einen Zylinder einbeschrieben und zu einem weiteren kleineren Anteil in ein Prisma mit trilobularem Querschnitt einbeschrieben, wobei auch der Querschnitt des Gewindekerns dieses kleineren Gewindeabschnitts eine trilobulare Form aufweist.

Der Formabschnitt 5 erstreckt sich von der Schraubenspitze 6 bis zum Gewindeabschnitt 4 und umfasst einen mit der Schraubenspitze 6 versehenen ersten Teilformabschnitt 51 und einen zweiten Teilformabschnitt 53 zwischen denen ein Zwischenabschnitt 52 angeordnet ist. An den zweiten Teilformabschnitt 53 schließt sich ein dritter Teilformabschnitt 54 an, der an den Gewindeabschnitt 4 angrenzt.

Der erste Teilformabschnitt 51 und der zweite Teilformabschnitt 53 weisen jeweils einen in Richtung auf die Schraubenspitze 6 abnehmenden Querschnitt auf. Der dritte Teilformabschnitt 54 hat einen konstanten Querschnitt.

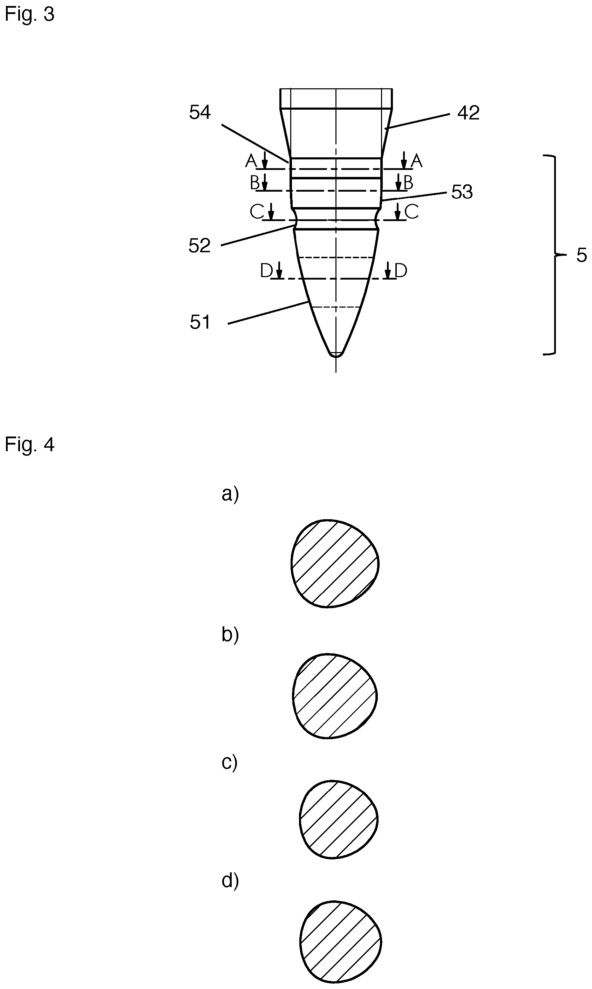

Der Zwischenabschnitt 52 ist in Form einer umlaufenden Nut mit in axialer Richtung bogenförmiger Seitenkontur ausgebildet, die nicht symmetrisch zu ihrer die Nut horizontal in zwei Hälften teilenden, umlaufenden Mittellinie (entspricht der Linie C - C in Figur 3) ist. Vielmehr weist der Zwischenabschnitt 52 an seinem dem ersten Teilformabschnitt 51 zugewandten Ende einen kleineren Querschnitt auf, als an seinem dem zweiten Teilformabschnitt 53 zugewandten Ende. In Richtung auf die Schraubenspitze 6 weist die dem zweiten Teilformabschnitt 53 zugewandte Hälfte des Zwischenabschnitts 52 einen abnehmenden Querschnitt und die dem ersten Teilformabschnitt 51 zugewandte Hälfte des Zwischenabschnitts 52 einen zunehmenden Querschnitt auf.

Die Teilformabschnitte 51, 53, 54 sowie auch der Zwischenabschnitt 52 des Formabschnitts 5 weisen im Ausführungsbeispiel einen trilobularen Querschnitt auf. Der Querschnitt des Zwischenabschnitts 52 kann hierbei - anders als bei dem vorliegenden Ausführungsbeispiel - auch kreisförmig ausgebildet sein. In Figur 4 sind Querschnitte des Formabschnitts 5 an verschiedenen axialen Positionen gezeigt.

Beim Montieren der Schraube 1 in ein - nicht dargestelltes - Blech (oder auch mehrere Bleche) wird diese unter hohem Druck auf das Blech gedrückt und mit Hilfe eines Schraubwerkzeugs, das formschlüssig in die Einformung 21 des Schraubenkopfes 2 eingreift, mit hoher Drehzahl rotiert. Durch die dabei erzeugte Reibungswärme wird das Blech plastisch verformbar, wodurch der Formabschnitt 5 mit der Schraubenspitze 6 in das Blechmaterial eindringen kann. Hierbei dringt zunächst der erste Teilformabschnitt 51 in das Blechmaterial ein, wodurch das den Teilformabschnitt 51 umgebende Blechmaterial verdrängt wird. Bei Passieren des Zwischenabschnitts 52 entfällt auf dessen Länge eine weitere radiale Verdrängung des Blechmaterials nach außen, wodurch in dem den Formabschnitt 5 umgebenden Blechbereich Spannungen in dem Blechmaterial reduziert werden.

Nachfolgend wird das Blechmaterial wieder nach außen gedrückt und der zweite Teilformabschnitt 53 durchdringt das Blechmaterial, wobei der durch den ersten Teilformabschnitt gebildete Durchzug weiter ausgebildet wird. Der dritte Teilformabschnitt 54 gleitet nun durch den ausgebildeten Durchzug, wodurch der sich anschließende Gewindeabschnitt 4 zentriert in den Durchzug eingeführt wird, wobei der erste Gewindegang des Gewindes 41 in das Blech eingreift. Hierdurch ist ein Zwangsvorschub bewirkt, der den nachfolgenden Gewindeformprozess einleitet.

Durch die besondere Gestaltung des Gewindes 41, dessen äußere Kanten der Gewindeflanken zumindest bereichsweise ein Prisma mit trilobularem Querschnitt beschreiben, ist ein geringeres Einschraubdrehmoment erzielt. Dieses ist durch die nicht längs des gesamten Umfangs, sondern nur an bereichsweise auftretender Reibauflage entstehende niedrigere Reibung begründet. Zugleich neigt das Blechmaterial in der auf diese Weise ausgeformten Gewindebohrung dazu, zurückzufedern und sich beim Erkalten zusammenzuziehen, wodurch eine Selbsthemmung erzielt ist, wodurch die Schraubverbindung gegen selbsttätiges Lösen gesichert ist.

## Patentansprüche

1. Loch- und gewindeformende Schraube (1), mit einem Schraubenkopf (2), der eine Schraubenantriebsausbildung aufweist, und einen hieran anschließenden, an seinem freien Ende eine Schraubenspitze (6) aufweisenden Schraubenschaft (3), der einen zumindest bereichsweise mit einem Gewinde versehenen Gewindeabschnitt (4) und einen sich bis zur Schraubenspitze (6) erstreckenden, zumindest bereichsweise gewindefreien Formabschnitt (5) aufweist, dessen Querschnitt in Richtung auf die Schraubenspitze (6) abnimmt, **dadurch gekennzeichnet, dass** der Formabschnitt (5) einen ersten Teilformabschnitt (51) und einen zweiten Teilformabschnitt (53) aufweist, deren Querschnitte jeweils in Richtung auf die Schraubenspitze (6) kontinuierlich abnehmen und zwischen denen einen Zwischenabschnitt (52) angeordnet ist, der zumindest bereichsweise einen in Richtung auf die Schraubenspitze (6) zunehmenden Querschnitt aufweist.

2. Schraube nach Anspruch 1, **dadurch gekennzeichnet, dass** der Zwischenabschnitt (52) einen in Richtung auf die Schraubenspitze (6) abnehmenden ersten Teilabschnittquerschnitt aufweist, der in einen zweiten Teilabschnitt mit in Richtung auf die Schraubenspitze (6) zunehmenden Querschnitt übergeht.

3. Schraube nach Anspruch 2, **dadurch gekennzeichnet, dass** der Zwischenabschnitt (52) durch eine in den Formabschnitt (5) eingebrachte umlaufende Nut gebildet ist.

4. Schraube nach Anspruch 3, **dadurch gekennzeichnet, dass** die Nut in axialer Richtung eine bogenförmige Seitenkontur aufweist.

5. Schraube nach einem der Ansprüche 2 bis 4, **dadurch gekennzeichnet, dass** der minimale Querschnitt des zweiten Teilformabschnitts (53) größer ist, als der maximale Querschnitt des ersten Teilformabschnitts (51).

6. Schraube nach Anspruch 5, **dadurch gekennzeichnet, dass** der kleinste Durchmesser des Zwischenabschnitts 52 zwischen 40/50 und 17/20 des größten Durchmesser des ersten Teilformabschnitts 51 beträgt.

7. Schraube nach einem der vorgenannten Ansprüche, **dadurch gekennzeichnet, dass** die äußeren Kanten der Gewindeflanken des Gewindes (41) des Gewindeabschnitts (4) zumindest bereichsweise in ein Prisma mit abgerundeten Ecken, insbesondere mit einem Querschnitt in Form eines Dreiecks mit abgerundeten Ecken und konvex gekrümmten Seiten einbeschrieben sind und der Querschnitt des Gewindekerns des Gewindeabschnitts (4) des Schraubenschafts (3) zumindest bereichsweise die Form eines Polygons, insbesondere eines Dreiecks mit abgerundeten Ecken und konvex gekrümmten Seiten aufweist.

8. Schraube nach einem der vorgenannten Ansprüche, **dadurch gekennzeichnet, dass** der Formabschnitt (5) zumindest bereichsweise einen Querschnitt in Form eines Polygons, insbesondere eines Dreiecks mit abgerundeten Ecken und konvex gekrümmten Seiten aufweist.

9. Schraube nach einem der vorgenannten Ansprüche, **dadurch gekennzeichnet, dass** die Mantelflächen des ersten Teilformabschnitts (51) und des zweiten Teilformabschnitts (53) zumindest bereichsweise auf einem gemeinsamen Rotationskörper liegen, dessen Querschnitt in Richtung der Schraubenspitze (6) kontinuierlich abnimmt.

10. Schraube nach einem der vorgenannten Ansprüche, **dadurch gekennzeichnet, dass** die Seitenlinien des ersten Teilformabschnitts (51) und des zweiten Teilformabschnitts (53) jeweils eine konstante Krümmung aufweisen.

11. Schraube nach einem der vorgenannten Ansprüche, **dadurch gekennzeichnet, dass** der Formabschnitt (5) im Anschluss an den Gewindeabschnitt (4) einen dritten Teilformabschnitt (54) mit konstantem Querschnitt aufweist.

## Geänderte Patentansprüche

### Geänderte Patentansprüche gemäss Regel 137(2) EPÜ.

1. Loch- und gewindeformende Schraube (1), mit einem Schraubenkopf (2), der eine Schraubenantriebsausbildung aufweist, und einen hieran anschließenden, an seinem freien Ende eine Schraubenspitze (6) aufweisenden Schraubenschaft (3), der einen zumindest bereichsweise mit einem Gewinde versehenen Gewindeabschnitt (4) und einen sich bis zur Schraubenspitze (6) erstreckenden, zumindest bereichsweise gewindefreien Formabschnitt (5) aufweist, dessen Querschnitt in Richtung auf die Schraubenspitze (6) abnimmt, wobei der Formabschnitt (5) einen ersten Teilformabschnitt (51) und einen zweiten Teilformabschnitt (53) aufweist, deren Querschnitte jeweils in Richtung auf die Schraubenspitze (6) kontinuierlich abnehmen und zwischen denen einen Zwischenabschnitt (52) angeordnet ist, der zumindest bereichsweise einen in Richtung auf die Schraubenspitze (6) zunehmenden Querschnitt aufweist, wobei der Zwischenabschnitt (52) einen in Richtung auf die Schraubenspitze (6) abnehmenden ersten Teilabschnittquerschnitt aufweist, der in einen zweiten Teilabschnitt mit in Richtung auf die Schraubenspitze (6) zunehmenden Querschnitt übergeht, wobei der Zwischenabschnitt (52) durch eine in den Formabschnitt (5) eingebrachte umlaufende Nut gebildet ist, **dadurch gekennzeichnet, dass** die Nut in axialer Richtung eine bogenförmige Seitenkontur aufweist.

2. Schraube nach Anspruch 1, **dadurch gekennzeichnet, dass** der minimale Querschnitt des zweiten Teilformabschnitts (53) größer ist, als der maximale Querschnitt des ersten Teilformabschnitts (51).

3. Schraube nach Anspruch 2, **dadurch gekennzeichnet, dass** der kleinste Durchmesser des Zwischenabschnitts 52 zwischen 40/50 und 17/20 des größten Durchmesser des ersten Teilformabschnitts 51 beträgt.

4. Schraube nach einem der vorgenannten Ansprüche, **dadurch gekennzeichnet, dass** die äußeren Kanten der Gewindeflanken des Gewindes (41) des Gewindeabschnitts (4) zumindest bereichsweise in ein Prisma mit abgerundeten Ecken, insbesondere mit einem Querschnitt in Form eines Dreiecks mit abgerundeten Ecken und konvex gekrümmten Seiten einbeschrieben sind und der Querschnitt des Gewindekerns des Gewindeabschnitts (4) des Schraubenschafts (3) zumindest bereichsweise die Form eines Polygons, insbesondere eines Dreiecks mit abgerundeten Ecken und konvex gekrümmten Seiten aufweist.

5. Schraube nach einem der vorgenannten Ansprüche, **dadurch gekennzeichnet, dass** der Formabschnitt (5) zumindest bereichsweise einen Querschnitt in Form eines Polygons, insbesondere eines Dreiecks mit abgerundeten Ecken und konvex gekrümmten Seiten aufweist.

6. Schraube nach einem der vorgenannten Ansprüche, **dadurch gekennzeichnet, dass** die Mantelflächen des ersten Teilformabschnitts (51) und des zweiten Teilformabschnitts (53) zumindest bereichsweise auf einem gemeinsamen Rotationskörper liegen, dessen Querschnitt in Richtung der Schraubenspitze (6) kontinuierlich abnimmt.

7. Schraube nach einem der vorgenannten Ansprüche, **dadurch gekennzeichnet, dass** die Seitenlinien des ersten Teilformabschnitts (51) und des zweiten Teilformabschnitts (53) jeweils eine konstante Krümmung aufweisen.

8. Schraube nach einem der vorgenannten Ansprüche, **dadurch gekennzeichnet, dass** der Formabschnitt (5) im Anschluss an den Gewindeabschnitt (4) einen dritten Teilformabschnitt (54) mit konstantem Querschnitt aufweist.
